# EUROPEAN PATENT APPLICATION

(11) **EP 4 797 520 A1**
(43) Date of publication of application: **26.08.2026**
(21) Application number: 24929088.3
(22) Date of filing: 22.07.2024
(51) Int. Cl.: H02M 3/335, H02M 1/08, H02M 1/32

(54) **CONVERTER DRIVE CONTROL METHOD, CONVERTER AND CHIP**

(30) Priority: 12.03.2024 CN 202410277701
(71) Applicant: Shanghai Moorewatt Energy Technology Co., Ltd., Shanghai 200131 (CN)
(72) Inventor: HOU, Kun, Shanghai 200131 (CN); XU, Rong, Shanghai 200131 (CN)
(74) Representative: Zacco Sweden AB
(86) International application number: PCT/CN2024/106774
(87) International publication number: WO 2025/189633

(57) **Abstract**

The present disclosure relates to a converter drive control method, a converter and a chip. The converter comprises a DC-side H-bridge circuit and a controller, wherein the DC-side H-bridge circuit comprises a first bridge leg and a second bridge leg. The method is used in the controller. The method comprises switching a drive mode of a DC-side H-bridge circuit from a first drive mode to a second drive mode at a preset mode switching moment, and controlling a target switching device to turn on for a preset compensation duration at the mode switching moment, wherein the first drive mode comprises a target bridge leg being a leading bridge leg, the second drive mode comprises the target bridge leg being a lagging bridge leg, a switching device that is turned on last in the first drive mode is turned on first in the second drive mode, the target bridge leg is one of a first bridge leg and a second bridge leg, and the target switching device is the switching device that is turned on later in the second drive mode among two switching devices of the target bridge leg. The method can improve the operating reliability of converters.

## Description

### RELATED APPLICATIONS

This disclosure claims priority to Chinese Patent Application No. 2024102777013, filed on March 12, 2024, and entitled "CONVERTER DRIVE CONTROL METHOD, CONVERTER AND CHIP," the entire contents of which are incorporated herein by reference.

### TECHNICAL FIELD

The present disclosure relates to the technical field of converter control, and in particular, to a converter drive control method, a converter, and a chip.

### BACKGROUND

In the drive control process of a DC-AC converter or an AC-DC converter, one of a first bridge arm and a second bridge arm of a DC-side H-bridge circuit is a leading bridge arm, and the other is a lagging bridge arm. Since the switching devices are turned off by hard switching, the transformer current magnitudes at the turn-off instants of the leading bridge arm and the lagging bridge arm differ significantly, resulting in a relatively large difference in turn-off losses between the leading bridge arm and the lagging bridge arm, which causes uneven heating of the leading bridge arm and the lagging bridge arm.

In a converter drive control method in the related art, after operating for a period of time with the first bridge arm as the leading bridge arm and the second bridge arm as the lagging bridge arm, the first bridge arm is configured as the lagging bridge arm and the second bridge arm is configured as the leading bridge arm to operate for another period of time, so as to solve the problem of uneven heating of the two bridge arms.

However, the above converter drive control method has poor reliability.

### SUMMARY

In view of the above technical issues, it is necessary to provide a converter drive control method, a converter, and a chip capable of improving the operation reliability of the converter.

In a first aspect, the present disclosure provides a converter drive control method. The converter includes a DC-side H-bridge circuit and a controller, the DC-side H-bridge circuit includes a first bridge arm and a second bridge arm, and the method is used in the controller. The method includes: switching a drive mode of the DC-side H-bridge circuit from a first drive mode to a second drive mode at a preset mode switching instant; and controlling a target switching device to be turned on for a preset compensation duration at the mode switching instant.

The first drive mode includes a target bridge arm being a leading bridge arm, the second drive mode includes the target bridge arm being a lagging bridge arm, and a switching device turned on last in the first drive mode is turned on first in the second drive mode. The target bridge arm is one of the first bridge arm and the second bridge arm, and the target switching device is a switching device turned on later in the second drive mode among two switching devices of the target bridge arm.

In an embodiment, the first bridge arm includes a first switching device and a second switching device, and the second bridge arm includes a third switching device and a fourth switching device. The first switching device and the third switching device are located at a first terminal of the DC-side H-bridge circuit, and the second switching device and the fourth switching device are located at a second terminal of the DC-side H-bridge circuit.

The first drive mode includes: in any switching cycle, the second switching device being turned on first for a preset drive duration; the fourth switching device being turned on for the drive duration after a lag duration relative to the second switching device; the first switching device being turned on for the drive duration after the second switching device is turned off; and the third switching device being turned on for the drive duration after the fourth switching device is turned off.

The second drive mode includes: in any switching cycle, the third switching device being turned on first for the drive duration; the first switching device being turned on for the drive duration after the lag duration relative to the third switching device; the fourth switching device being turned on for the drive duration after the third switching device is turned off; and the second switching device being turned on for the drive duration after the first switching device is turned off.

Controlling the target switching device to be turned on for the preset compensation duration at the mode switching instant includes: controlling the second switching device to be turned on for the compensation duration at the mode switching instant.

In an embodiment, the first bridge arm includes a first switching device and a second switching device, and the second bridge arm includes a third switching device and a fourth switching device. The first switching device and the third switching device are located at a first terminal of the DC-side H-bridge circuit, and the second switching device and the fourth switching device are located at a second terminal of the DC-side H-bridge circuit.

The first drive mode includes: in any switching cycle, the third switching device being turned on first for a preset drive duration; the first switching device being turned on for the drive duration after a lag duration relative to the third switching device; the fourth switching device being turned on for the drive duration after the third switching device is turned off; and the second switching device being turned on for the drive duration after the first switching device is turned off.

The second drive mode includes: in any switching cycle, the second switching device being turned on first for the drive duration; the fourth switching device being turned on for the drive duration after the lag duration relative to the second switching device; the first switching device being turned on for the drive duration after the second switching device is turned off; and the third switching device being turned on for the drive duration after the fourth switching device is turned off.

Controlling the target switching device to be turned on for the preset compensation duration at the mode switching instant includes: controlling the third switching device to be turned on for the compensation duration at the mode switching instant.

In an embodiment, the compensation duration is equal to a lag duration, and the lag duration is a duration by which the lagging bridge arm lags behind the leading bridge arm.

In an embodiment, an interval between two adjacent mode switching instants is less than one power frequency cycle.

In an embodiment, the interval between two adjacent mode switching instants is equal to half a power frequency cycle.

In an embodiment, the mode switching instant is from a first time to a second time. The first time is earlier than a zero-crossing time of an AC-side voltage of the converter, and the second time is later than the zero-crossing time.

In an embodiment, the mode switching instant is the zero-crossing time.

In a second aspect, the present disclosure further provides a converter, including a DC-side H-bridge circuit and a controller. The DC-side H-bridge circuit includes a first bridge arm and a second bridge arm, and the controller is configured to switch a drive mode of the DC-side H-bridge circuit from a first drive mode to a second drive mode at a preset mode switching instant, and control a target switching device to be turned on for a preset compensation duration at the mode switching instant.

The first drive mode includes a target bridge arm being a leading bridge arm, the second drive mode includes the target bridge arm being a lagging bridge arm, and a switching device turned on last in the first drive mode is turned on first in the second drive mode. The target bridge arm is one of the first bridge arm and the second bridge arm, and the target switching device is a switching device turned on later in the second drive mode among two switching devices of the target bridge arm.

In a third aspect, the present disclosure further provides a chip, including a memory and a processor. The memory has a computer program stored thereon, and the processor, when executing the computer program, implements steps of the method in the first aspect of the disclosure.

In the converter drive control method, the converter and the chip, the converter includes the DC-side H-bridge circuit and the controller. The DC-side H-bridge circuit includes the first bridge arm and the second bridge arm, and the method is used in the controller. The method includes: switching the drive mode of the DC-side H-bridge circuit from the first drive mode to the second drive mode at the preset mode switching instant, and controlling the target switching device to be turned on for the preset compensation duration at the mode switching instant. The first drive mode includes the target bridge arm being the leading bridge arm, the second drive mode includes the target bridge arm being the lagging bridge arm, and the switching device turned on last in the first drive mode is turned on first in the second drive mode. The target bridge arm is one of the first bridge arm and the second bridge arm, and the target switching device is the switching device turned on later in the second drive mode among the two switching devices of the target bridge arm. In this way, the drive mode of the DC-side H-bridge circuit is switched from the first drive mode to the second drive mode at the preset mode switching instant, the switching device that is turned on last in the first drive mode is configured to be turned on first in the second drive mode, and the switching device of the lagging bridge arm, which is turned on later in the second drive mode, is controlled to be turned on for the preset compensation duration at the mode switching instant, thereby avoiding the situation in the related art where directly switching the leading bridge arm and the lagging bridge arm causes the pulse loss in the output voltage at the mode switching instant, while ensuring that the positive-negative pattern of the output voltage of the DC-side H-bridge circuit does not change. The methods provided by the above embodiments can improve the operation reliability of the converter.

### BRIEF DESCRIPTION OF THE DRAWINGS

In order to illustrate the technical solutions in the embodiments of the present disclosure or in the conventional art more clearly, the accompanying drawings required in the description of the embodiments or the conventional art will be briefly introduced below. Obviously, the drawings in the following description are only embodiments of the present disclosure, and for those of ordinary skill in the art, other drawings can be obtained based on the disclosed drawings without creative efforts.
FIG. 1 is a circuit topology diagram of a single-stage isolated grid-connected inverter according to an embodiment;
FIG. 2 is a schematic control timing diagram of a comparative converter drive control method;
FIG. 3 is a schematic control timing diagram of another comparative converter drive control method;
FIG. 4 is a schematic control timing diagram of a converter drive control method according to an embodiment;
FIG. 5 is a schematic control timing diagram of a converter drive control method according to another embodiment;
FIG. 6 is a schematic control timing diagram of a converter during operation according to an embodiment.

### DETAILED DESCRIPTION OF THE EMBODIMENTS

The technical solutions in the embodiments of the present disclosure will be described clearly and completely below with reference to the accompanying drawings in the embodiments of the present disclosure. Obviously, the described embodiments are only some, but not all, of the embodiments of the present disclosure. Based on the embodiments in the present disclosure, all other embodiments obtained by those of ordinary skill in the art without creative efforts shall fall within the protection scope of the present disclosure.

Unless otherwise defined, all technical and scientific terms used herein have the same meaning as commonly understood by those of ordinary skill in the art to which the present disclosure belongs. The terms used in the specification of the present disclosure herein are only for the purpose of describing specific embodiments and are not intended to limit the present disclosure.

It can be understood that the terms "first", "second", etc., used in the present disclosure, may be used herein to describe various elements, but these elements are not limited by these terms. These terms are only used to distinguish one element from another. For example, without departing from the scope of the present disclosure, a first resistor may be referred to as a second resistor, and similarly, a second resistor may be referred to as a first resistor. Both the first resistor and the second resistor are resistors, but they are not the same resistor.

It can be understood that "connection" in the following embodiments, if the connected circuits, modules, units, etc. have electrical signals or data transmission with each other, should be understood as "electrical connection", "communication connection", etc.

It can be understood that the term "based on" as used in the present disclosure is used to describe one or more factors that influence a determination and does not exclude other factors that may influence the determination. For example, the phrase "determining A based on B" means that the determination of A may be based entirely on or at least in part on factor B, i.e., B is a factor that influences the determination of A, but does not exclude that the determination of A may also be based on C.

As used herein, the singular forms "a", "an", and "the" may also include the plural forms unless the context clearly dictates otherwise. It can also be understood that the terms "comprising/including" or "having", etc., specify the presence of stated features, integers, steps, operations, components, parts, or combinations thereof, but do not preclude the possibility of the presence or addition of one or more other features, integers, steps, operations, components, parts, or combinations thereof. Meanwhile, the term "and/or" used in this specification includes any combination of the associated listed items.

The converter drive control method provided by the embodiments of the present disclosure can be used in a controller of a converter in which an H-bridge circuit (also referred to as a full-bridge circuit) is arranged on the DC side. The controller is at least connected to each switching device in the converter and is configured to control a switching frequency, a duty cycle, and a phase shift of each switching device. The converter may be a DC-AC converter, such as a single-stage isolated grid-connected inverter, or an AC-DC converter, such as a single-stage isolated rectifier.

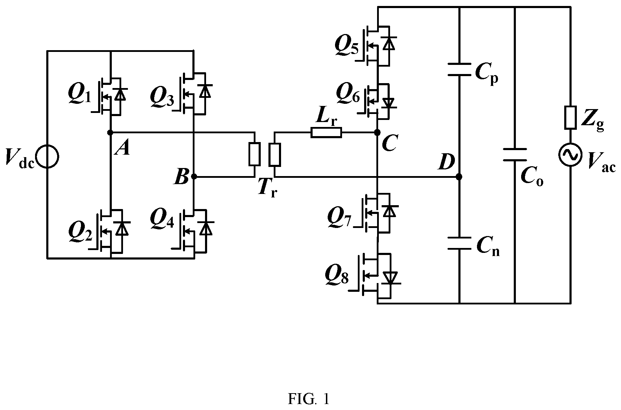

Referring to FIG. 1, a circuit topology diagram of a single-stage isolated grid-connected inverter, V_{dc} represents a DC-side power supply voltage, and V_{ac} represents an AC-side grid voltage. A first bridge arm of the DC-side H-bridge circuit includes a switching device Q₁ and a switching device Q₂, and a second bridge arm includes a switching device Q₃ and a switching device Q₄. A point *A* on the first bridge arm and a point *B* on the second bridge arm serve as a load interface of the DC-side H-bridge circuit, and Tr represents a transformer. The controller is not shown in FIG. 1. The controller is at least connected to each switching device in the converter and is configured to control the switching frequency, the duty cycle, and the phase shift of each switching device. The controller may be implemented using a Microcontroller Unit (MCU) chip, or based on a Digital Signal Processor (DSP) chip, a Field-Programmable Gate Array (FPGA), or a customized controller chip. Specific hardware for implementing the controller is not limited in the embodiments of the present disclosure.

As shown in FIG. 1, the AC side of the converter for which the converter drive control method provided by the embodiments of the present disclosure is used may be implemented employing a half-bridge circuit. An upper bridge arm of the Half-bridge circuit on the AC-side is implemented using a bidirectional switch composed of a switching device Q₅ and a switching device Q₆, and a lower bridge arm is implemented using a bidirectional switch composed of a switching device Q₇ and a switching device Q₈. A point *C* on the bridge arms is connected to a leakage inductance Lᵣ of the converter. The upper bridge arm corresponds to a capacitor Cₚ, and the lower bridge arm corresponds to a capacitor Cₙ. The capacitor Cₚ and the capacitor Cₙ are connected in series, and a capacitor Cₒ and a resistor Z_{g} form a filter circuit.

It should be noted that the embodiments of the present disclosure do not limit the specific circuit structure on the AC side, and FIG. 1 is only an exemplary embodiment.

The switching devices in the embodiments of the present disclosure may also be referred to as power switching transistors. Illustratively, the switching devices may be Metal-Oxide-Semiconductor Field-Effect Transistors (MOSFETs) or Insulated Gate Bipolar Transistors (IGBTs). The present disclosure does not limit the specific types and models of the switching devices.

In an exemplary embodiment, as shown in FIG. 1, the converter includes a DC-side H-bridge circuit and a controller. The DC-side H-bridge circuit includes a first bridge arm and a second bridge arm, and the converter drive control method is used in the controller. The method includes: switching a drive mode of the DC-side H-bridge circuit from a first drive mode to a second drive mode at a preset mode switching instant, and controlling a target switching device to be turned on for a preset compensation duration at the mode switching instant.

A switching device turned on last in the first drive mode is turned on first in the second drive mode. The first drive mode includes a target bridge arm being a leading bridge arm, and the second drive mode includes the target bridge arm being a lagging bridge arm. The target bridge arm is one of the first bridge arm and the second bridge arm. The target switching device is the one that is turned on later in the second drive mode among the two switching devices of the target bridge arm.

The first bridge arm includes a first switching device and a second switching device, and the second bridge arm includes a third switching device and a fourth switching device. The first switching device and the third switching device are arranged at a first terminal of the DC-side H-bridge circuit, and the second switching device and the fourth switching device are arranged at a second terminal of the DC-side H-bridge circuit. That is, the first switching device and the fourth switching device are arranged on one diagonal line of the DC-side H-bridge circuit, and the second switching device and the third switching device are arranged on the other diagonal line of the DC-side H-bridge circuit.

The converter drive control methods provided by the embodiments of the present disclosure are described with reference to the circuit topology of the converter and the positional relationship of the switching devices shown in FIG. 1. The first switching device corresponds to the switching device Q₁ in FIG. 1, the second switching device corresponds to the switching device Q₂ in FIG. 1, the third switching device corresponds to the switching device Q₃ in FIG. 1, and the fourth switching device corresponds to the switching device Q₄ in FIG. 1.

Through extensive experimental research, the applicant has found that when switching the drive modes of the leading and lagging bridge arms, it is necessary to compensate for the drive voltage and to define a timing relationship between the first turned-on switching device and the last turned-on switching device in the first drive mode and the second drive mode, so as to ensure the operation reliability of the converter during mode switching.

The following description introduces two manners of adopting the conduction compensation duration provided in the present disclosure, but the control timings of the switching devices in these two manners are different from the control timing of the above embodiments, to demonstrate the beneficial effects of the embodiments of the invention.

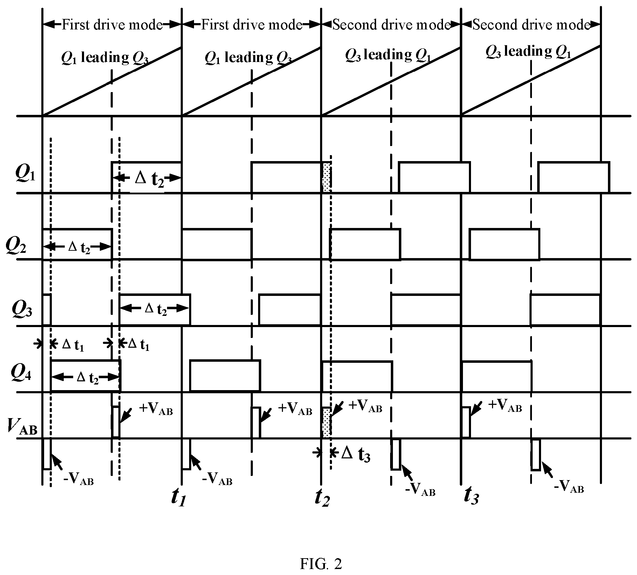

For a first control timing for switching devices, which is different from the control timing for switching devices of the embodiments of the invention, please refer to FIG. 2. As shown in FIG. 2, a first drive mode includes a first bridge arm being a leading bridge arm and a second bridge arm being a lagging bridge arm, and a second drive mode includes the first bridge arm being a lagging bridge arm and the second bridge arm being a leading bridge arm, i.e., the target bridge arm in the corresponding switching timing in FIG. 2 is the first bridge arm. In the first drive mode, the switching device Q₁ in the first bridge arm is turned on earlier than the switching device Q₃, the switching device Q₂ and the switching device Q₁ are turned on in high-frequency complementary manner, and the switching device Q₄ and the switching device Q₃ are turned on in high-frequency complementary manner. Specifically, the first drive mode includes: in any switching cycle, the switching device Q₂ is turned on first for a preset drive duration Δt₁, the switching device Q₄ is turned on for the drive duration Δt₁ after a lag duration Δt₂ relative to the switching device Q₂, the switching device Q₁ is turned on for the drive duration Δt₁ after the switching device Q₂ is turned off, and the switching device Q₃ is turned on for the drive duration Δt₁ after the switching device Q₄ is turned off.

In the second drive mode, the switching device Q₃ in the second bridge arm is turned on earlier than the switching device Q₁, the switching device Q₂ and the switching device Q₁ are turned on in high-frequency complementary manner, and the switching device Q₄ and the switching device Q₃ are turned on in high-frequency complementary manner. Specifically, the second drive mode includes: in any switching cycle, the switching device Q₄ is turned on first for the drive duration Δt₁, the switching device Q₂ is turned on for the drive duration Δt₁ after a lag duration Δt₂ relative to the switching device Q₄, the switching device Q₃ is turned on for the drive duration Δt₁ after the switching device Q₄ is turned off, and the switching device Q₁ is turned on for the drive duration Δt₁ after the switching device Q₂ is turned off.

In summary, it can be seen that the switching timing of each switching device in the first drive mode shown in FIG. 2 is only slightly adjusted by Δt₁, i.e., the switching device Q₁ is shifted backward by Δt₁ and the switching device Q₃ shifted forward by Δt₁, so that the turn-on timings of the switching device Q₁ and the switching device Q₃ are interchanged, and the turn-on timings of the switching device Q₂ and the switching device Q₄ are interchanged. Although controlling the switching device Q₁ to be turned on for the compensation duration at the mode switching instant can avoid voltage pulse loss at the mode switching instant, the timing of the output voltage V_{AB} of the DC-side H-bridge circuit in these two drive modes is disordered. Before the mode switching instant, the pattern is "negative → positive → negative → positive", and after the mode switching instant, the pattern is "positive → negative → positive → negative". That is, at the mode switching instant, the positive-negative pattern of the output voltage of the DC-side H-bridge circuit changes, causing the operation reliability of the converter to be reduced.

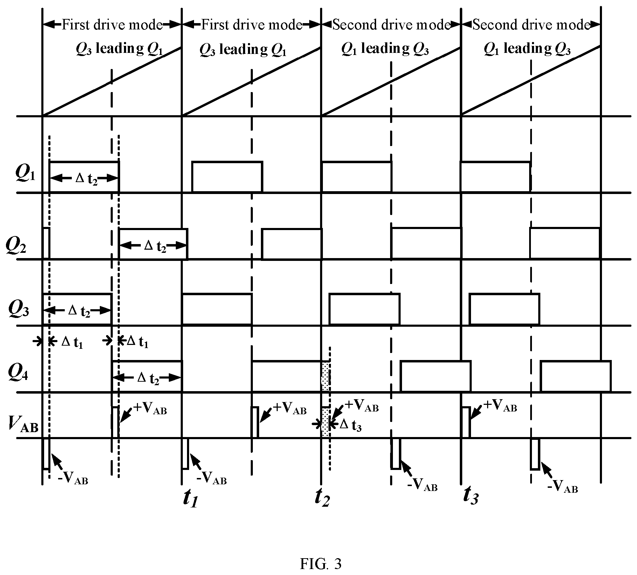

For a second control timing for switching devices, which is different from the control timing for switching devices of the embodiments of the invention, please refer to FIG. 3. As shown in FIG. 3, a first drive mode includes a first bridge arm being a lagging bridge arm and a second bridge arm being a leading bridge arm, and a second drive mode includes the first bridge arm being a leading bridge arm and the second bridge arm being a lagging bridge arm, i.e., the target bridge arm in the corresponding switching timing in FIG. 3 is the second bridge arm. In the first drive mode, the switching device Q₁ in the first bridge arm is turned on later than the switching device Q₃, the switching device Q₂ and the switching device Q₁ are turned on in high-frequency complementary manner, and the switching device Q₄ and the switching device Q₃ are turned on in high-frequency complementary manner. Specifically, the first drive mode includes: in any switching cycle, the switching device Q₃ is turned on first for a preset drive duration Δt₁, the switching device Q₁ is turned on for the drive duration Δt₁ after a lag duration Δt₂ relative to the switching device Q₃, the switching device Q₄ is turned on for the drive duration Δt₁ after the switching device Q₃ is turned off, and the switching device Q₂ is turned on for the drive duration Δt₁ after the switching device Q₁ is turned off. In the second drive mode, the switching device Q₃ in the second bridge arm is turned on later than the switching device Q₁, the switching device Q₂ and the switching device Q₁ are turned on in high-frequency complementary manner, and the switching device Q₄ and the switching device Q₃ are turned on in high-frequency complementary manner. Exemplarily, the second drive mode includes: in any switching cycle, the switching device Q₁ is turned on first for the preset drive duration Δt₁, the switching device Q₃ is turned on for the drive duration Δt₁ after a lag duration Δt₂ relative to the switching device Q₁, the switching device Q₂ is turned on for the drive duration Δt₁ after the switching device Q₁ is turned off, and the switching device Q₄ is turned on for the drive duration Δt₁ after the switching device Q₃ is turned off.

In summary, it can be seen that the switching timing of each switching device in the first drive mode shown in FIG. 3 is slightly adjusted by Δt₁, i.e., the switching device Q₃ is shifted backward by Δt₁ and the switching device Q₁ shifted forward by Δt₁, so that the turn-on timings of the switching device Q₁ and the switching device Q₃ are interchanged, and the turn-on timings of the switching device Q₂ and the switching device Q₄ are interchanged. Although controlling the switching device Q₁ to be turned on for the compensation duration at the mode switching instant can avoid voltage pulse loss at the mode switching instant, the timing of the output voltage V_{AB} of the DC-side H-bridge circuit in these two drive modes is disordered. Before the mode switching instant, the pattern is "negative → positive → negative → positive", and after the mode switching instant, the pattern is "positive → negative → positive → negative". That is, at the mode switching instant, the positive-negative pattern of the output voltage of the DC-side H-bridge circuit changes, causing the operation reliability of the converter to be reduced.

As can be seen from the control timings for switching devices shown in FIG. 2 and FIG. 3, the control timings for the switching devices in the first drive mode and the second drive mode need to be well designed, so that when the switching between the first drive mode and the second drive mode is performed, not only the switching of the leading and lagging bridge arms can be satisfied, but also the positive-negative pattern of the output voltage of the DC-side H-bridge circuit can be ensured not to change, thereby ensuring the operation reliability of the converter.

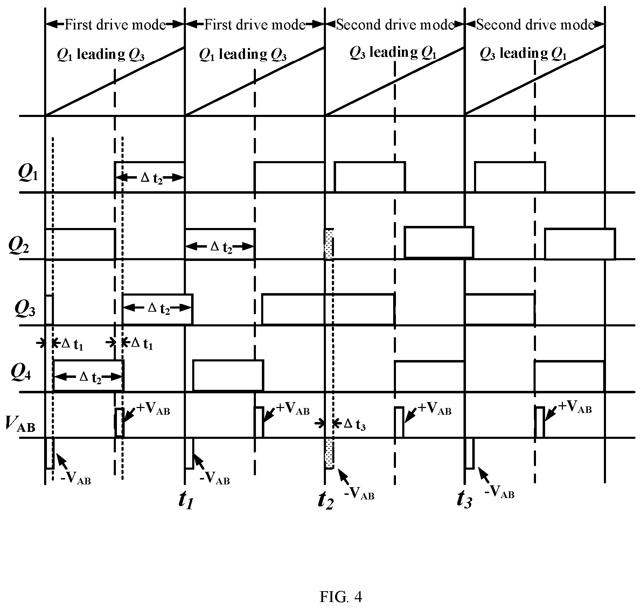

Referring to FIG. 4, a schematic control timing diagram of a converter drive control method according to a first embodiment of the invention, in the first embodiment of the invention, a first drive mode includes a first bridge arm being a leading bridge arm and a second bridge arm being a lagging bridge arm, and a second drive mode includes the first bridge arm being a lagging bridge arm and the second bridge arm being a leading bridge arm. In the first drive mode, the switching device Q₁ in the first bridge arm is turned on earlier than the switching device Q₃, the switching device Q₂ and the switching device Q₁ are turned on in a high-frequency complementary manner, and the switching device Q₄ and the switching device Q₃ are turned on in a high-frequency complementary manner. Specifically, the first drive mode includes: in any switching cycle, the switching device Q₂ is turned on first for a preset drive duration Δt₁, the switching device Q₄ is turned on for the drive duration Δt₁ after a lag duration Δt₂ relative to the switching device Q₂, the switching device Q₁ is turned on for the drive duration Δt₁ after the switching device Q₂ is turned off, and the switching device Q₃ is turned on for the drive duration Δt₁ after the switching device Q₄ is turned off. It should be noted that the drive duration shown in FIG. 4 being half a switching cycle is only for exemplary illustration of the control timing, and in practical applications, the drive duration may also be less than half a switching cycle, with a turn-on dead time set between corresponding switching devices to prevent a bridge arm short circuit. The drive durations in the accompanying drawings corresponding to the following embodiments are also for exemplary illustration only, which will not be described repeatedly in detail.

It can be understood that the switching device Q₂ being turned on at the start moment of the current switching cycle shown in FIG. 4 is also for exemplary illustration only. In the first drive mode of the implementation, the switching device Q₂ may be turned on at a moment after the start moment of the current switching cycle, and each turn-on timing may be performed according to the above description. In the embodiments of the present disclosure, the switching device being turned on first in the first drive mode or the second drive mode is not limited to being turned on at the start moment of the current switching cycle, which will not be described repeatedly in detail.

In the second drive mode, the switching device Q₃ in the second bridge arm is turned on earlier than the switching device Q₁, the switching device Q₂ and the switching device Q₁ are turned on in a high-frequency complementary manner, and the switching device Q₄ and the switching device Q₃ are turned on in a high-frequency complementary manner. Exemplarily, the second drive mode includes: in any switching cycle, the switching device Q₃ is turned on first for the drive duration Δt₁, the switching device Q₁ is turned on for the drive duration Δt₁ after a lag duration Δt₂ relative to the switching device Q₃, the switching device Q₄ is turned on for the drive duration Δt₁ after the switching device Q₃ is turned off, and the switching device Q₂ is turned on for the drive duration Δt₁ after the switching device Q₁ is turned off.

As shown in FIG. 4, an instant t₂ is a preset mode switching instant, a time period from an instant t₁ to the instant t₂ is one switching cycle, and the time period from the instant t₂ to an instant t₃ is also one switching cycle. It can be understood that in a plurality of consecutive switching cycles before the instant t₂, the switching devices in the DC-side H-bridge circuit of the converter are controlled to be turned on and off according to the first drive mode. At the instant t₂, the drive mode of the DC-side H-bridge circuit is switched to the second drive mode. In a plurality of consecutive switching cycles after the instant t₂, the switching devices in the DC-side H-bridge circuit of the converter are controlled to be turned on and off according to the second drive mode. The time period from the instant t₁ to the instant t₂ is one switching cycle, and the time period from the instant t₂ to the instant t₃ is one switching cycle.

In an embodiment, as shown in FIG. 4, the process of controlling the target switching device to be turned on for the preset compensation duration at the mode switching instant includes: controlling the switching device Q₂ to be turned on for a compensation duration Δt₃ at the mode switching instant.

As shown in FIG. 4, in the case of continuously controlling the DC-side H-bridge circuit based on the first drive mode, the output voltage of the DC-side H-bridge circuit in each switching cycle is sequentially -V_{AB} and +V_{AB}, where the voltage -V_{AB} is outputted when the switching device Q₂ and the switching device Q₃ are simultaneously turned on, and the voltage +V_{AB} is outputted when the switching device Q₄ and the switching device Q₁ are simultaneously turned on, as shown in the two switching cycles before and after the instant t₁. In the case of continuously controlling the DC-side H-bridge circuit based on the second drive mode, the output voltage of the DC-side H-bridge circuit in each switching cycle is also sequentially -V_{AB} and +V_{AB}, where the voltage -V_{AB} is outputted when the switching device Q₂ and the switching device Q₃ are simultaneously turned on, and the voltage +V_{AB} is outputted when the switching device Q₄ and the switching device Q₁ are simultaneously turned on, as shown in the switching cycles after the instant t₃. As shown in FIG. 4, the switching device Q₂ is turned on after the switching device Q₁ is turned off in the second drive mode, which will result in that, in the first switching cycle after the mode switching instant t₂, the control timing of the switching device Q₂ is switched to be the control timing in the second drive mode, and the switching device Q₂ cannot be simultaneously turned on with the switching device Q₃ to output the voltage -V_{AB}, thus causing a pulse loss in the output voltage of the DC-side H-bridge circuit of the converter at the mode switching instant t₂, and resulting in poor operation reliability of the converter. In contrast, in the embodiment of the invention, the switching device Q₂ is controlled to be turned on for the preset compensation duration at the mode switching instant t₂, so that the DC-side H-bridge circuit outputs a compensation voltage -V_{AB} at the mode switching instant t₂ (as shown by a dotted box at the instant t₂ in FIG. 4), thereby avoiding the situation in the related art where directly switching the leading bridge arm and the lagging bridge arm causes the pulse loss in the output voltage at the mode switching instant. Moreover, the configuration of the control timings for the switching devices in the first drive mode and the second drive mode not only satisfies the switching of the leading and lagging bridge arms, but also satisfies that the switching device Q₃ turned on last in the first drive mode is turned on first in the second drive mode, thereby ensuring that after the switching device Q₂ is turned on for the compensation duration Δt₃ at the mode switching instant, the output voltage of the DC-side H-bridge circuit of the converter always maintains the pattern of "negative → positive → negative → positive". This embodiment of the invention can improve the operation reliability of the converter.

It should be noted that FIG. 4 illustrates the control timing by taking a modulation wave used by the controller being a sawtooth wave as an example. It can be understood that the modulation wave which can be used in the embodiments of the present disclosure is not limited to a sawtooth wave, but may also be a triangular wave or a wave of any other form.

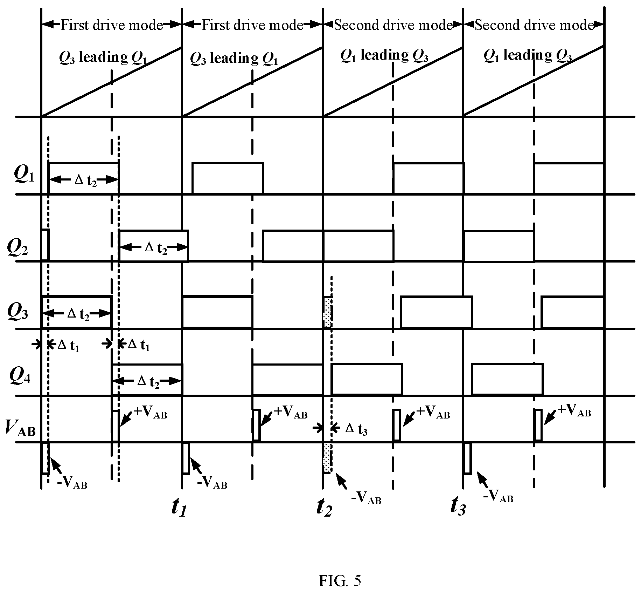

In a second embodiment of the invention, referring to FIG. 5, a first drive mode includes a second bridge arm being a leading bridge arm and a first bridge arm being a lagging bridge arm, and a second drive mode includes the second bridge arm being a lagging bridge arm and the first bridge arm being a leading bridge arm. In the first drive mode, the switching device Q₁ in the first bridge arm is turned on later than the switching device Q₃, the switching device Q₂ and the switching device Q₁ are turned on in a high-frequency complementary manner, and the switching device Q₄ and the switching device Q₃ are turned on in a high-frequency complementary manner. Specifically, the first drive mode includes: in any switching cycle, the switching device Q₃ is turned on first for a preset drive duration Δt₁, the switching device Q₁ is turned on for the drive duration Δt₁ after a lag duration Δt₂ relative to the switching device Q₃, the switching device Q₄ is turned on for the drive duration Δt₁ after the switching device Q₃ is turned off, and the switching device Q₂ is turned on for the drive duration Δt₁ after the switching device Q₁ is turned off.

In the second drive mode, the switching device Q₃ in the second bridge arm is turned on later than the switching device Q₁, the switching device Q₂ and the switching device Q₁ are turned on in a high-frequency complementary manner, and the switching device Q₄ and the switching device Q₃ are turned on in a high-frequency complementary manner. Exemplarily, the second drive mode includes: in any switching cycle, the switching device Q₂ is turned on first for a preset drive duration Δt₁, the switching device Q₄ is turned on for the drive duration Δt₁ after a lag duration Δt₂ relative to the switching device Q₂, the switching device Q₁ is turned on for the drive duration Δt₁ after the switching device Q₂ is turned off, and the switching device Q₃ is turned on for the drive duration Δt₁ after the switching device Q₄ is turned off.

It can be understood that the second embodiment of the invention is a symmetrical process of the first embodiment. That is, the first implementation corresponds to switching from the first bridge arm being the leading bridge arm to the first bridge arm being the lagging bridge arm, and the second embodiment corresponds to switching from the first bridge arm being the lagging bridge arm to the first bridge arm being the leading bridge arm.

In the second implementation, as shown in FIG. 5, the process of controlling the target switching device to be turned on for the preset compensation duration at the mode switching instant includes: controlling the switching device Q₃ to be turned on for a compensation duration Δt₃ at the mode switching instant. In this way, the DC-side H-bridge circuit outputs a compensation voltage - V_{AB} at the mode switching instant t₂ (as shown by a dotted box at the instant t₂ in FIG. 5), avoiding the situation in the related art where directly switching the leading bridge arm and the lagging bridge arm causes a pulse loss in the output voltage at the mode switching instant. Moreover, the configuration of the control timings for the switching devices in the first drive mode and the second drive mode not only satisfies the switching of the leading and lagging bridge arms, but also satisfies that the switching device Q₂ turned on last in the first drive mode is turned on first in the second drive mode, thereby ensuring that after the switching device Q₃ is turned on for the compensation duration Δt₃ at the mode switching instant, the output voltage of the DC-side H-bridge circuit of the converter always maintains the pattern of "negative → positive → negative → positive". This embodiment of the invention can improve the operation reliability of the converter.

It should be noted that the above two implementations are only examples of control timings. Those skilled in the art can also construct, based on the above two implementations, a first drive mode and a second drive mode that maintain the pattern of "positive → negative → positive → negative" unchanged, and corresponding switching control timings, or based on other first drive modes and second drive modes that maintain the pattern of "negative → positive → negative → positive" unchanged, and corresponding switching control timings, which are not listed one by one in the embodiments of the present disclosure.

In the converter drive control method provided by the above embodiments, the drive mode of the DC-side H-bridge circuit is switched from the first drive mode to the second drive mode at the preset mode switching instant, the switching device that is turned on last in the first drive mode is configured to be turned on first in the second drive mode, and the switching device of the lagging bridge arm, which is turned on later in the second drive mode, is controlled to be turned on for the preset compensation duration at the mode switching instant, thereby avoiding the situation in the related art where directly switching the leading bridge arm and the lagging bridge arm causes the pulse loss in the output voltage at the mode switching instant, while ensuring that the positive-negative pattern of the output voltage of the DC-side H-bridge circuit does not change. The methods provided by the above embodiments can improve the operation reliability of the converter.

In an exemplary embodiment, the compensation duration Δt₃ is equal to the lag duration Δt₂. The lag duration Δt₂ is the lag duration of the lagging bridge arm relative to the leading bridge arm. In this embodiment, the compensation voltage outputted by the DC-side H-bridge circuit at the mode switching instant is the same as the voltage value normally outputted by the DC-side H-bridge circuit, further improving the operation stability of the converter.

In another exemplary embodiment, the compensation duration Δt₃ may be slightly greater than the lag duration Δt₂, or may be slightly less than the lag duration Δt₂.

In an exemplary embodiment, in the provided converter control method, an interval between two adjacent mode switching instants is less than one power frequency cycle.

In the normal operation process of the converter, a plurality of mode switching instants are configured according to actual application requirements to achieve the switching of the leading and lagging bridge arms multiple times, thereby preventing uneven heating of the two bridge arms. It can be understood that in the converter drive control method provided by the present disclosure, a mode switching instant set is configured, and at each mode switching instant, the method provided in the embodiments above is used to perform a drive voltage compensation during the switching process of the leading and lagging bridge arms.

In an embodiment, the interval between any two temporally adjacent mode switching instants in the mode switching instant set is controlled to be less than one power frequency cycle, thereby avoiding significant heating of the bridge arm that is currently in a lagging state.

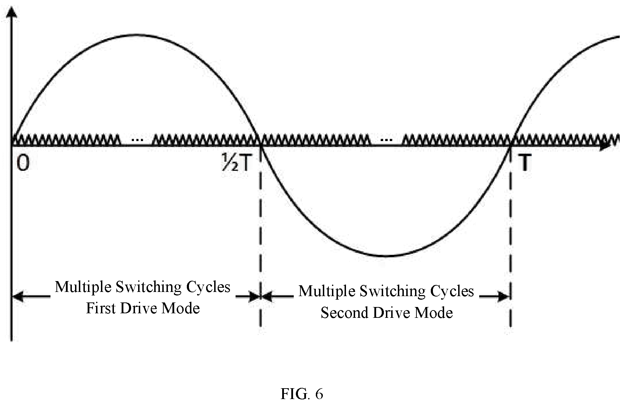

Optionally, the interval between any two adjacent mode switching instants is equal to half a power frequency cycle. Referring to FIG. 6, the interval between any two adjacent mode switching instants is equal to 1/2 T, where T represents the power frequency cycle corresponding to the AC-side grid of the converter. In FIG. 6, each small triangle corresponds to one switching cycle, and half a power frequency cycle corresponds to a plurality of switching cycles. Exemplarily, the power frequency cycle corresponding to the AC-side grid is in the order of milliseconds (ms), for example, 20 ms. One switching cycle is in the order of microseconds (µs), for example, 10 µs. Half a power frequency cycle corresponds to hundreds or even thousands of switching cycles.

In an exemplary embodiment, the mode switching instant ranges from a first time to a second time, the first time is earlier than a zero-crossing time of an AC-side voltage of the converter, and the second time is later than the zero-crossing time.

When the converter is in operation, the voltage value of the AC-side voltage near the zero-crossing time is relatively small. Compared with configuring the mode switching instant at other positions, configuring the mode switching instant at or near the zero-crossing time of the AC-side voltage in the embodiments of the invention can improve the tolerance and fault tolerance of the converter for the switching of the leading and lagging bridge arms, further improving the operation stability of the converter.

Optionally, the mode switching instant is configured at the zero-crossing time of the AC-side voltage. Referring to FIG. 6, the mode switching instant is set at a time 1/2 T, a time T, and so on in sequence.

In an exemplary embodiment, as shown in FIG. 1, the converter includes a DC-side H-bridge circuit and a controller, the DC-side H-bridge circuit includes a first bridge arm and a second bridge arm, and the converter drive control method is used in the controller. The converter drive control method provided in an embodiment includes: at a zero-crossing time of the AC-side voltage, switching the drive mode of the DC-side H-bridge circuit from a first drive mode to a second drive mode, and controlling a target switching device to be turned on for a preset compensation duration at the zero-crossing time. The first drive mode includes a target bridge arm being a leading bridge arm, the second drive mode includes the target bridge arm being a lagging bridge arm, a switching device that is turned on last in the first drive mode is turned on first in the second drive mode, the target bridge arm is one of the first bridge arm and the second bridge arm, and the target switching device is the one that is turned on later in the second drive mode among the two switching devices of the target bridge arm.

An embodiment of the present disclosure provides a converter. The converter includes a DC-side H-bridge circuit and a controller. The DC-side H-bridge circuit includes a first bridge arm and a second bridge arm. The controller is configured to switch a drive mode of the DC-side H-bridge circuit from a first drive mode to a second drive mode at a preset mode switching instant, and to control a target switching device to be turned on for a preset compensation duration at the mode switching instant. The first drive mode includes a target bridge arm being a leading bridge arm, the second drive mode includes the target bridge arm being a lagging bridge arm, a switching device that is turned on last in the first drive mode is turned on first in the second drive mode, the target bridge arm is one of the first bridge arm and the second bridge arm, and the target switching device is the one that is turned on later among the two switching devices of the target bridge arm.

In an exemplary embodiment, the first bridge arm includes a first switching device and a second switching device, and the second bridge arm includes a third switching device and a fourth switching device. The first switching device and the third switching device are arranged at a first terminal of the DC-side H-bridge circuit, and the second switching device and the fourth switching device are arranged at a second terminal of the DC-side H-bridge circuit. The first drive mode includes: in any switching cycle, the second switching device is turned on first for a preset drive duration, the fourth switching device is turned on for the drive duration after a lag duration relative to the second switching device, the first switching device is turned on for the drive duration after the second switching device is turned off, and the third switching device is turned on for the drive duration after the fourth switching device is turned off. The second drive mode includes: in any switching cycle, the third switching device is turned on first for the drive duration, the first switching device is turned on for the drive duration after the lag duration relative to the third switching device, the fourth switching device is turned on for the drive duration after the third switching device is turned off, and the second switching device is turned on for the drive duration after the first switching device is turned off.

In the embodiment, the controller is configured to control the second switching device to be turned on for the compensation duration at the mode switching instant.

In an exemplary embodiment, the first drive mode includes: in any switching cycle, the third switching device is turned on first for a preset drive duration, the first switching device is turned on for the drive duration after a lag duration relative to the third switching device, the fourth switching device is turned on for the drive duration after the third switching device is turned off, and the second switching device is turned on for the drive duration after the first switching device is turned off. The second drive mode includes: in any switching cycle, the second switching device is turned on first for the drive duration, the fourth switching device is turned on for the drive duration after the lag duration relative to the second switching device, the first switching device is turned on for the drive duration after the second switching device is turned off, and the third switching device is turned on for the drive duration after the fourth switching device is turned off.

In the embodiment, the controller is configured to control the third switching device to be turned on for the compensation duration at the mode switching instant.

In an exemplary embodiment, the compensation duration is equal to the lag duration, which is the duration by which the lagging bridge arm lags behind the leading bridge arm.

In an exemplary embodiment, an interval between two adjacent mode switching instants is less than one power frequency cycle.

In an exemplary embodiment, the interval between two adjacent mode switching instants is equal to half a power frequency cycle.

In an exemplary embodiment, the mode switching instant is from a first time to a second time, the first time is earlier than a zero-crossing time of an AC-side voltage of the converter, and the second time is later than the zero-crossing time.

In an exemplary embodiment, the mode switching instant is the zero-crossing time of the AC-side voltage.

An embodiment of the present disclosure further provides a chip. The chip includes a memory and a processor. The memory has a computer program stored thereon. The processor, when executing the computer program, implements the steps of the method of any one of the embodiments described above.

In an embodiment, a computer device is further provided, including a memory and a processor, the memory has a computer program stored thereon, and the processor, when executing the computer program, implements the steps of the method of any one of the embodiments described above.

In an embodiment, a computer-readable storage medium is provided, having a computer program stored thereon. The computer program, when executed by a processor, implements the steps in various method embodiments described above.

In an embodiment, a computer program product is provided, including a computer program which, when executed by a processor, implements the steps in the various method embodiments described above.

It should be noted that the user information (including but not limited to user device information, user personal information, etc.) and data (including but not limited to data for analysis, stored data, displayed data, etc.) involved in the present disclosure are all information and data that have been authorized by the user or fully authorized by all parties, and the collection, use, and processing of relevant data must comply with relevant regulations.

Those of ordinary skill in the art can understand that all or part of the processes in the methods of the above embodiments can be implemented by instructing relevant hardware through a computer program. The computer program can be stored in a non-transitory computer-readable storage medium. The computer program, when executed, can include the processes of the method of any embodiments described above. Any reference to a memory, database, or other media used in the embodiments provided in the present disclosure may include at least one of non-transitory memory and transitory memory. The non-transitory memory may include Read-Only Memory (ROM), magnetic tape, floppy disk, flash memory, optical memory, high-density embedded non-transitory memory, resistive memory (ReRAM), Magnetoresistive Random Access Memory (MRAM), Ferroelectric Random Access Memory (FRAM), Phase Change Memory (PCM), graphene memory, and the like. Transitory memory may include Random Access Memory (RAM) or external cache memory, etc. By way of illustration and not limitation, RAM may be in various forms, such as Static Random Access Memory (SRAM) or Dynamic Random Access Memory (DRAM), etc. The databases involved in the embodiments provided in the present disclosure may include at least one of relational databases and non-relational databases. Non-relational databases may include distributed databases based on blockchain, etc., but are not limited thereto. The processors involved in the embodiments provided in the present disclosure may be general-purpose processors, central processing units, graphics processors, digital signal processors, programmable logic devices, data processing logic devices based on quantum computing, etc., but are not limited thereto.

The technical features of the embodiments above can be combined arbitrarily. For the sake of brevity, not all possible combinations of the technical features in the embodiments above are described. However, as long as there is no contradiction in the combinations of the technical features, these combinations should be considered to be within the scope of the specification.

The embodiments above are merely several implementations of the present disclosure, and the descriptions thereof are relatively specific and detailed, but should not be construed as limiting the scope of the patent application. It should be noted that for those of ordinary skill in the art, various variations and improvements can be made without departing from the concept of the present disclosure, and these variations and improvements all fall within the protection scope of the present disclosure. Therefore, the protection scope of the patent of the present disclosure should be subject to the appended claims.

## Claims

1. A converter drive control method, **characterized in that** the converter comprises a DC-side H-bridge circuit and a controller, the DC-side H-bridge circuit comprises a first bridge arm and a second bridge arm, the method is used in the controller, and the method comprises:
switching a drive mode of the DC-side H-bridge circuit from a first drive mode to a second drive mode at a preset mode switching instant, and
controlling a target switching device to be turned on for a preset compensation duration at the mode switching instant;
wherein the first drive mode comprises a target bridge arm being a leading bridge arm, the second drive mode comprises the target bridge arm being a lagging bridge arm, and a switching device turned on last in the first drive mode is turned on first in the second drive mode; the target bridge arm is one of the first bridge arm and the second bridge arm; and the target switching device is a switching device turned on later in the second drive mode among two switching devices of the target bridge arm.

2. The method according to claim 1, wherein the first bridge arm comprises a first switching device and a second switching device, and the second bridge arm comprises a third switching device and a fourth switching device; the first switching device and the third switching device are located at a first terminal of the DC-side H-bridge circuit, and the second switching device and the fourth switching device are located at a second terminal of the DC-side H-bridge circuit;
the first drive mode comprises: in any switching cycle, the second switching device being turned on first for a preset drive duration; the fourth switching device being turned on for the drive duration after a lag duration relative to the second switching device; the first switching device being turned on for the drive duration after the second switching device is turned off; and the third switching device being turned on for the drive duration after the fourth switching device is turned off;
the second drive mode comprises: in any switching cycle, the third switching device being turned on first for the drive duration; the first switching device being turned on for the drive duration after the lag duration relative to the third switching device; the fourth switching device being turned on for the drive duration after the third switching device is turned off; and the second switching device being turned on for the drive duration after the first switching device is turned off; and
controlling the target switching device to be turned on for the preset compensation duration at the mode switching instant comprises: controlling the second switching device to be turned on for the compensation duration at the mode switching instant.

3. The method according to claim 1, wherein the first bridge arm comprises a first switching device and a second switching device, and the second bridge arm comprises a third switching device and a fourth switching device; the first switching device and the third switching device are located at a first terminal of the DC-side H-bridge circuit, and the second switching device and the fourth switching device are located at a second terminal of the DC-side H-bridge circuit;
the first drive mode comprises: in any switching cycle, the third switching device being turned on first for a preset drive duration; the first switching device being turned on for the drive duration after a lag duration relative to the third switching device; the fourth switching device being turned on for the drive duration after the third switching device is turned off; and the second switching device being turned on for the drive duration after the first switching device is turned off;
the second drive mode comprises: in any switching cycle, the second switching device being turned on first for the drive duration; the fourth switching device being turned on for the drive duration after the lag duration relative to the second switching device; the first switching device being turned on for the drive duration after the second switching device is turned off; and the third switching device being turned on for the drive duration after the fourth switching device is turned off; and
controlling the target switching device to be turned on for the preset compensation duration at the mode switching instant comprises: controlling the third switching device to be turned on for the compensation duration at the mode switching instant.

4. The method according to any one of claims 1 to 3, wherein the compensation duration is equal to a lag duration, and the lag duration is a duration by which the lagging bridge arm lags behind the leading bridge arm.

5. The method according to any one of claims 1 to 3, wherein an interval between two adjacent mode switching instants is less than one power frequency cycle.

6. The method according to claim 5, wherein the interval between two adjacent mode switching instants is equal to half a power frequency cycle.

7. The method according to any one of claims 1 to 3, wherein the mode switching instant is from a first time to a second time; the first time is earlier than a zero-crossing time of an AC-side voltage of the converter, and the second time is later than the zero-crossing time.

8. The method according to claim 7, wherein the mode switching instant is the zero-crossing time.

9. A converter, **characterized by** comprising a DC-side H-bridge circuit and a controller, wherein the DC-side H-bridge circuit comprises a first bridge arm and a second bridge arm, and the controller is configured to switch a drive mode of the DC-side H-bridge circuit from a first drive mode to a second drive mode at a preset mode switching instant, and control a target switching device to be turned on for a preset compensation duration at the mode switching instant;
wherein the first drive mode comprises a target bridge arm being a leading bridge arm, the second drive mode comprises the target bridge arm being a lagging bridge arm, and a switching device turned on last in the first drive mode is turned on first in the second drive mode; the target bridge arm is one of the first bridge arm and the second bridge arm; and the target switching device is a switching device turned on later among two switching devices of the target bridge arm.

10. A chip, comprising a memory and a processor, wherein the memory has a computer program stored thereon, and the processor, when executing the computer program, implements steps of the method according to any one of claims 1 to 8.
